# EUROPÄISCHE PATENTSCHRIFT

(11) **EP 2 212 984 B1**
(45) Veröffentlichungstag und Bekanntmachung des Hinweises auf die Patenterteilung: **20.04.2011**
(21) Anmeldenummer: 08852970.6
(22) Anmeldetag: 18.11.2008
(51) Int. Cl.: H02K 3/38, H02K 15/10

(54) **WICKLUNGSANORDNUNG FÜR EINE ELEKTRISCHE MASCHINE UND TRENNELEMENT FÜR EINE SOLCHE ANORDNUNG**
WINDING ARRANGEMENT FOR AN ELECTRIC MACHINE AND SEPARATING ELEMENT FOR SUCH ARRANGEMENT
ENSEMBLE D'ENROULEMENTS POUR UNE MACHINE ÉLECTRIQUE, ET ÉLÉMENT DE SÉPARATION POUR UN TEL ENSEMBLE

(30) Priorität: 24.11.2007 DE 202007016482 U
(43) Veröffentlichungstag der Anmeldung: 04.08.2010
(73) Patentinhaber: EBM-Papst Mulfingen GmbH&CO. KG, 74673 Mulfingen (DE)
(72) Erfinder: STRENG, Gunter, 74575 Schrozberg (DE); HOFMANN, Walter, 74673 Mulfingen (DE); HOFF, Markus, 74653 Künzelsau (DE)
(74) Vertreter: Patentanwälte Dr. Solf & Zapf
(86) Internationale Anmeldenummer: PCT/EP2008/065726
(87) Internationale Veröffentlichungsnummer: WO 2009/065815

(56) Entgegenhaltungen:
- DE-U1- 20 102 590
- US-A- 3 919 572

## Beschreibung

Die Erfindung betrifft eine Wicklungsanordnung für eine elektrische Maschine, wie für einen Elektromotor oder für einen Generator, bestehend aus einem metallischen, insbesondere als Blechpaket ausgeführten Wickelkern sowie aus durch Nuten des Wickelkerns verlaufenden und außerhalb der Nuten auf Stirnseiten des Wickelkerns jeweils einen Wickelkopf bildenden Wicklungen, wobei die Wicklungen im Bereich jedes Wickelkopfes mindestens zwei übereinander liegende Wickellagen bilden, zwischen denen jeweils ein im Wesentlichen scheibenförmiges, aus einem elektrisch isolierenden Material bestehendes Trennelement im Wesentlichen spaltfrei an die Wicklungen angeschmiegt angeordnet ist. Des Weiteren betrifft die Erfindung ein Trennelement für eine solche Anordnung.

Wicklungsanordnungen für elektrische Maschinen, wie Elektromotoren oder Generatoren, mit elektrisch isolierenden Elementen für die Wicklungen sind bekannt. Hierbei kommen im Allgemeinen zweidimensional ausgebildete Isolationselemente zum Einsatz, die in aufwändiger Weise eingesetzt und verarbeitet werden müssen. Eine Automatisation des Fertigungsprozesses gestaltet sich daher schwierig.

Die DE 1 975 287 U beschreibt eine Phasenisolation für im Träufelverfahren mit erhärtenden Stoffen getränkte Wickelköpfe elektrischer Maschinen, wobei ein perforiertes Isoliermaterial eingesetzt wird, welches insbesondere eine im eingebauten ungetränkten Zustand der Prüfspannung der Maschine standhaltende Dicke aufweist. Bei diesem Isoliermaterial kann es sich bevorzugt um ein Mehrschichtmaterial handeln, wobei insbesondere die Schichten aus verschiedenen Stoffen bestehen.

Die DE 31 45 655 C2 beschreibt einen Isolierkörper aus durchbrochenem blattförmigem Material für Wicklungen von Elektromotoren, welcher ein Paar von Kopfteilen zum Trennen der Wickelköpfe zweier verschiedener Wicklungen des Stators umfasst, die beidseitig der beiden Kopfteile angeordnet werden. Außerdem umfasst der Isolierkörper mehrere parallele Streifen, die die genannten Kopfteile miteinander verbinden und dazu vorgesehen sind, sich jeweils durch eine Nut der Statorarmatur zu erstrecken. Dabei ist vorgesehen, dass eines der Kopfteile an seinem den Streifen entgegengesetzten Ende drei aufeinanderfolgende ungefaltete Blätter aufweist, die durch Falzlinien miteinander verbunden und zu einer Manschette eingeschlagen sind, um Vertiefungen aufzunehmen, die zwischen Drähten wenigstens einer Wicklung und wenigstens einer der Speiseleitungen hergestellt sind.

Die DD 288 940 B5 beschreibt eine ähnliche Anordnung wie die eingangs genannte, die zur Phasenisolation im Wickelkopf bei elektrischen Maschinen, insbesondere bei Statorwicklungen bei Außenläufermotoren dient. Bei dieser Anordnung sind aus Isolierstoff bestehende Endscheiben stirnseitig auf dem Blechpaket angeordnet, und diese Stirnscheiben, welche die Polzähne und das Blechpaket abdecken, sind mit axial gerichteten, starren Kammern versehen, die entsprechend der jeweiligen Wicklungsart und dem Wickelschritt angeordnet werden. Dadurch werden starre Kammersysteme mit starren Spurenkammern gebildet. Dies führt aber bedingt durch große Luftspalte nachteiligerweise zu einer großen Bauhöhe.

Eine Wicklungsanordnung der eingangs genannten Art ist aus der DE 201 02 590 U1 bekannt. Diese unterscheidet sich grundlegend von der vorstehend beschriebenen Anordnung, indem anstatt eines starren, große Spalte erzeugenden Systems elastisch verformbare Trennelemente vorgesehen sind, die jeweils nach Aufbringen der nächsten - auch als Phasenstrang bezeichneten - Wickellage unter anschmiegender Verformung im Wesentlichen spaltfrei zwischen den Wickellagen sitzen. Die Trennelemente weisen dabei bevorzugt auf ihrer vom Wickelkern wegweisenden Seite Fixiermittel für die Wicklungen der nächsten Wickellage auf, und zwar insbesondere in Form vom stegartigen Halteansätzen, die an den Verlauf der Wicklungen der nächsten Wickellage so angepaßt sind, dass sie die Wicklungen gegen radiales Abrutschen vom Trennelement fixieren. Außerdem sind die Trennelemente insbesondere auf ihrer dem Wickelkern zugekehrten Seite derart kappenartig mit einem die Wickellage übergreifenden Randsteg ausgebildet, dass sie selbstfixierend auf die Wicklungen der jeweils unteren Wickellage aufsetzbar sind. Derartige Wicklungsanordnungen und Trennelemente haben sich in der Praxis bewährt.

Sowohl bei der Anordnung gemäß der DD 288 940 B5, als auch bei der Anordnung gemäß der DE 201 02 590 U1 handelt es sich bei den zur Phasenisolation eingesetzten Elementen um dreidimensional ausgebildete Körper mit relativ großer Höhenerstreckung, z. B. bei der DE 201 02 590 U1 durch die genannten Randstege und stegartigen Halteansätze, die als eine Art Wicklungsträger fungieren und daher auch einen relativ hohen Wicklungsaufbau nach sich ziehen und kein oder nur ein eingeschränktes Abpressen der Wicklung erlauben.

Des Weiteren ist in der DE 201 02 590 U1 ausgeführt, dass das Trennelement nach seinem Aufsetzen auf den Wickelkopf zunächst nur auf den jeweils unteren Wicklungen punkt- bzw. linienförmig tangential aufliegt, so dass noch ein Luftspalt besteht, der aber nach dem Wickeln der nächsten Wickellage durch Verformung des Trennelementes fast vollständig beseitigt wird. Dadurch bedingt liegt das Trennelement im Montagezustand unter mechanischer Spannung vor, wobei eine mehr oder weniger vollständig erfolgende Schließung der Luftspalte von der beim Aufbringen der nächsten Wickellage aufgewendeten Kraft abhängt. Auf diese Weise ist es möglich, dass die Prozesssicherheit der bekannten Wickelanordnung negativ beeinflusst wird.

Der Erfindung liegt die Aufgabe zu Grunde, eine Wicklungsanordnung der genannten Art zu schaffen, die für die Wicklungslagen eine prozesssichere Isolation gewährleistet, aber einen noch besser automatisierbaren Wickelablauf und insbesondere eine verringerte Höhe der Wicklung ermöglicht. Die vorstehend beschriebenen Nachteile des Standes der Technik sollen durch die Erfindung überwunden werden.

Diese Aufgabe wird erfindungsgemäß dadurch gelöst, dass die Unterseite des Trennelementes durch eine vorgeformte Freiformfläche gebildet ist, die eine exakte Negativabbildung der unter dem Trennelement liegenden Wickellage ist.

Die Herstellung der Trennelemente, denen auch selbst, d. h. als Einzelteile, eine erfindungsgemäße Bedeutung zugemessen wird, ist fertigungstechnisch einfach. Die Trennelemente können insbesondere als Spritzgieß- oder als Kunststoffziehteile ausgebildet sein.

Dabei wird zur Herstellung der entsprechenden, in diesen Verfahren einzusetzenden Formen zunächst auf den Wickelkern der mit der Wicklungsanordnung auszustattenden elektrischen Maschine im Sinne der Herstellung eines Prototyps eine erste Wickellage aufgebracht und die mit der Wickellage versehene Stirnseite des Wickelkerns einer dreidimensionalen Scannung unterworfen. Entsprechend den auf diese Weise gewonnenen Topographiedaten wird die Kavität der Form für das Trennelement, welches auf die erste Wickellage aufgebracht werden soll, hergestellt. Das Trennelement, dessen Unterseite nun durch eine Freiformfläche gebildet ist, die eine exakte Negativabbildung der unter dem Trennelement liegenden Wickellage ist, wird dann gefertigt und montiert.

Zweckmäßigerweise kann das Trennelement dabei - von mit dem Formgebungsprozess bedingten Fertigungstoleranzen abgesehen - eine im Wesentlichen uniforme Dicke aufweisen, die vorzugsweise kleiner als 1 mm sein kann. Auf diese Weise ist auch die Oberseite des Trennelementes durch eine Freiformfläche gebildet, die eine exakte Negativabbildung der unter dem Trennelement liegenden Wickellage ist. Bedarfsweise ist aber auch eine bereichsweise Variation der Dicke des Trennelementes möglich, so dass die Form der Freiformfläche auf der Oberseite des Trennelementes von der der Unterseite abweicht.

Nach der Montage des Trennelementes wird die nächste Wickellage aufgebracht und der Vorgang des Scannens wiederholt. Zur Umsetzung der gewonnenen

Topographiedaten in die korrespondierenden Formausbildungen können dabei mit Vorteil auch Verfahren des sogenannten "Rapid Prototyping" zum Einsatz kommen. Es handelt sich dabei um fertigungstechnische Methoden der Urformung, wie Stereolithografie, selektives Lasersintern oder -generieren, Laminated Object Modelling u. a., wonach ein Werkstück aus vorhandenen CAD-Daten schichtweise aus formlosem oder formneutralem Material unter Nutzung physikalischer und/oder chemischer Effekte aufgebaut wird.

Das nächste Trennelement, dessen Unterseite nun auf die zweite Wickellage aufgebracht werden kann, wobei diese Unterseite wiederum durch eine vorgeformte Freiformfläche gebildet ist, die eine exakte Negativabbildung der unter dem Trennelement liegenden Wickellage ist, wird dann gefertigt und montiert. Der beschriebene Vorgang für die Formfertigung wird entsprechend der Anzahl der vorzusehenden Wicklungslagen wiederholt. Mit den dann vorhandenen Formen kann eine Serien- bzw. Massenfertigung der Trennelemente erfolgen.

In der erfindungsgemäßen Wicklungsanordnung liegt das Trennelement nach seinem Aufsetzen auf den Wickelkopf nicht nur auf den jeweils unteren Wicklungen punkt- bzw. linienförmig auf, sondern sofort vollflächig. Ein Luftspalt, der durch das Wickeln der nächsten Wickellage durch Verformung des Trennelementes beseitigt werden müsste, besteht nicht. Zwar kann für das erfindungsgemäße Trennelement in vorteilhafter Ausbildung eine Verformbarkeit vorgesehen sein, jedoch ist diese nicht zwingend erforderlich, um die Spaltbildung zu unterbinden. Dabei liegt das Trennelement im Montagezustand nahezu spannungsfrei zwischen den Wickellagen, was die Prozesssicherheit erhöht. In welcher Größe beim Aufbringen der nächsten Wickellage Kraft aufgewendet wird, spielt dafür keine Rolle.

Weitere vorteilhafte Ausführungen der Erfindung sind in den Unteransprüchen und der nachfolgenden Beschreibung enthalten. Anhand eines in den beiliegenden Zeichnungsfiguren dargestellten Ausführungsbeispiels wird die Erfindung näher erläutert. Es zeigen:
- Fig. 1 und 2: in perspektivischer Darstellung, ein Ausführungsbeispiel für ein er- findungsgemäßes Trennelement einer erfindungsgemäßen Wicklungsanordnung,
- Fig. 3: ebenfalls in perspektivischer Darstellung, ein Ausführungsbeispiel für eine erfindungsgemäße Wicklungsanordnung nach Aufbringung einer ersten Wickellage,
- Fig. 4: in einer Darstellung wie in Fig. 3, die erfindungsgemäße Wicklungs- anordnung nach Aufbringung einer ersten Wickellage und Montage eines erfindungsgemäßen Trennelements,
- Fig. 5: in einer Darstellung wie in Fig. 3 und 4, die erfindungsgemäße Wicklungsanordnung nach Aufbringung einer zweiten Wickellage,
- Fig. 6: das komplettierte, in den Fig. 3 bis 5 dargestellte Bauteil mit der erfindungsgemäßen Wicklungsanordnung.

In den Figuren der Zeichnung sind dieselben Teile auch stets mit denselben Bezugszeichen versehen, so dass sie in der Regel auch jeweils nur einmal beschrieben werden.

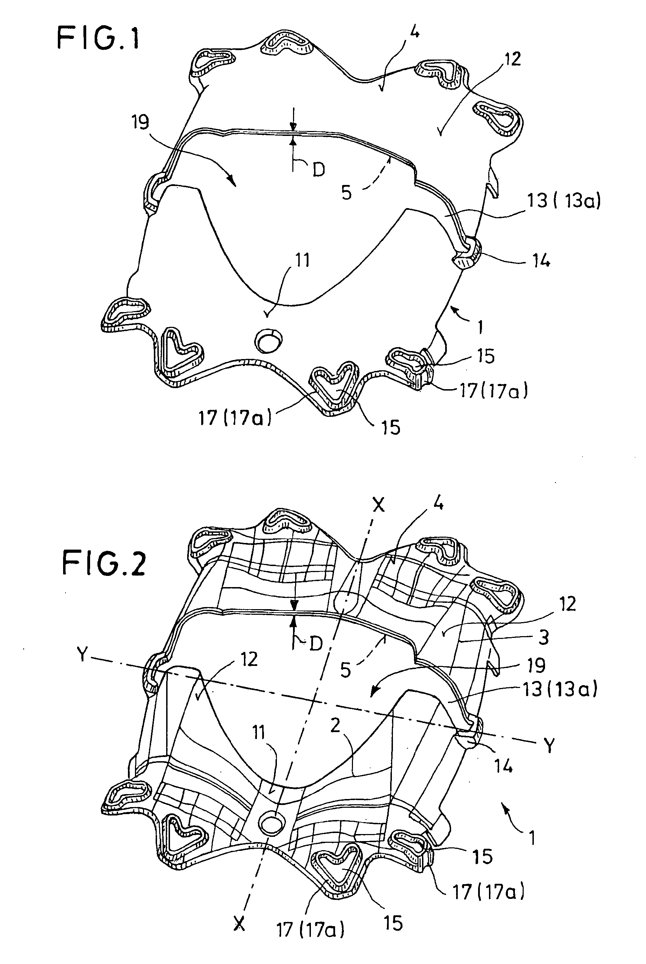

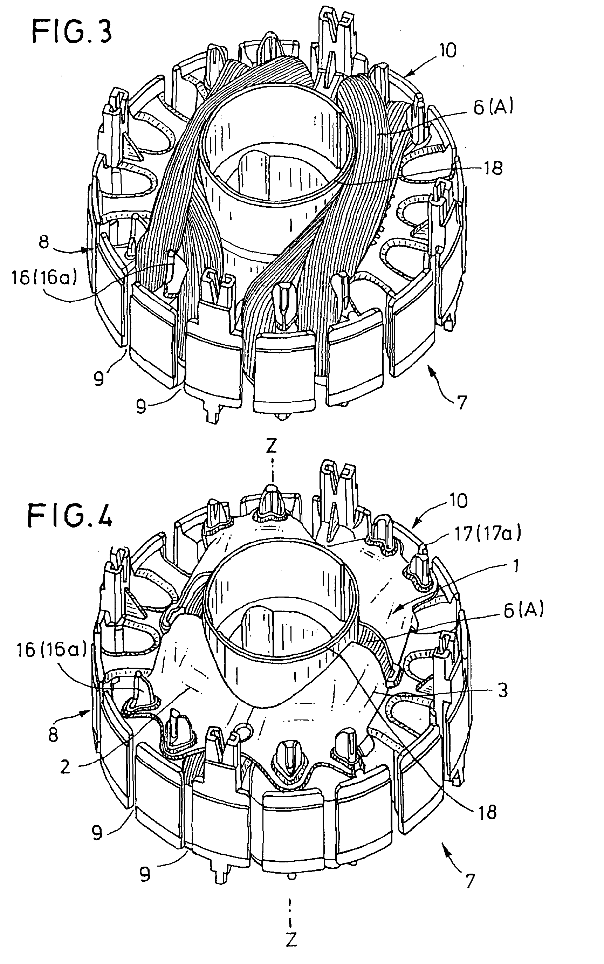

Wie erwähnt, zeigen Fig. 1 und 2 eine beispielhafte Ausführung eines erfindungsgemäßen - auch als Phasenisolationsteil zu bezeichnenden - im Wesentlichen scheibenförmigen Trennelementes 1, wobei es sich dabei in den beiden Figuren um ein und dasselbe Teil handelt. In Fig. 2 sind lediglich zusätzlich - wie im Übrigen auch in Fig. 4 - zur besseren Veranschaulichung der Flächenausbildung am Trennelement 1 Höhenlinien 2 und Kantenlinien 3 eingezeichnet. Hierzu ist allerdings zu bemerken, dass Kanten im eigentlichen Sinn in der gezeigten Ausführung nicht vorliegen, sondern im Sinne einer beschädigungsfreien Montage sämtlich verrundet sind.

Wie zunächst Fig. 1 zeigt, ist die Oberseite 4 des erfindungsgemäßen Trennelementes 1 durch eine vorgeformte Freiformfläche gebildet. Es ist dabei in bevorzugter Ausführung vorgesehen, dass das Trennelement 1 eine gleichmäßige bzw. uniforme Dicke D aufweist, die insbesondere kleiner als 1 mm ist. Daraus ergibt sich - wenngleich in der Zeichnung verdeckt dargestellt -, dass auch die Unterseite 5 des erfindungsgemäßen Trennelementes 1 durch eine vorgeformte Freiformfläche gebildet ist, die - wie erfindungsgemäß vorgesehen - eine exakte Negativabbildung einer unter dem Trennelement 1 liegenden Wickellage 6 einer erfindungsgemäßen Wicklungsanordnung 7 ist, wie sie in Fig. 3 bis 6 exemplarisch dargestellt ist.

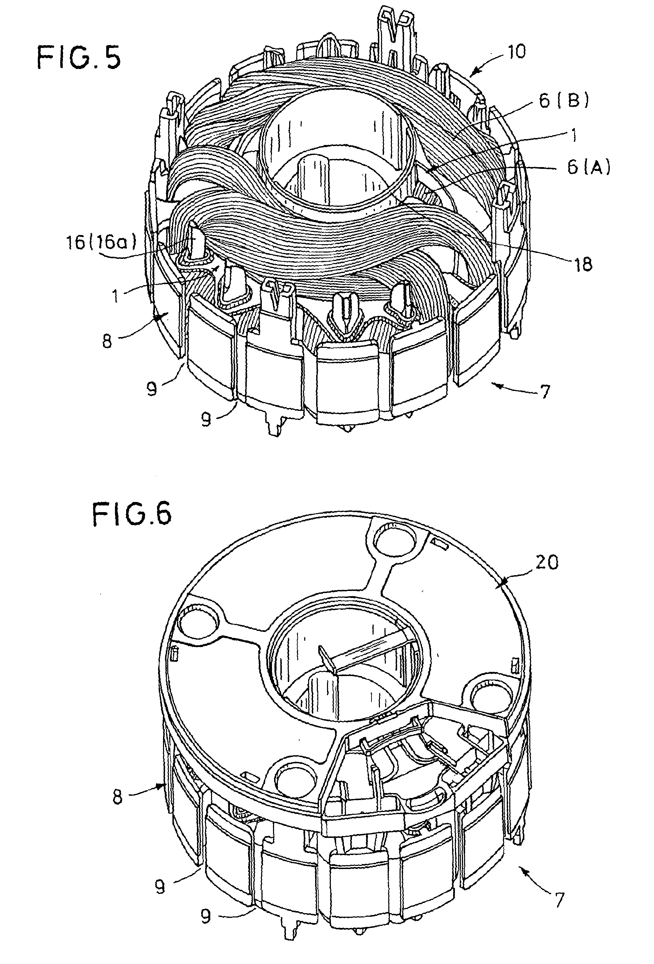

Bei dieser exemplarisch dargestellten erfindungsgemäßen Wicklungsanordnung 7 handelt es sich konkret um den Stator eines Elektromotors. Dieser besteht aus einem metallischen, insbesondere als Blechpaket ausgeführten Wickelkern 8 sowie aus durch Nuten 9 des Wickelkerns 8 verlaufenden und außerhalb der Nuten 9 auf Stirnseiten des Wickelkerns 8 jeweils einen Wickelkopf 10 bildenden Wicklungen 6. Dabei bilden die Wicklungen 6 im Bereich jedes Wickelkopfes 10 mindestens zwei übereinander liegende Wickellagen, von denen die erste insbesondere Fig. 3 und die zweite insbesondere Fig. 5 zu entnehmen ist und die in den Figuren mit den Bezugszeichen A und B bezeichnet sind. Das erfindungsgemäße Trennelement 1 wird bei seiner Montage elektrisch isolierend zwischen den Wickellagen A, B angeordnet, wie dies insbesondere Fig. 5 zeigt.

Das erfindungsgemäße Trennelement 1 kann bevorzugt - insbesondere in Serien- oder Massenfertigung hergestellt - als Spritzgießteil oder als Ziehteil ausgebildet sein und aus Kunststoff einer entsprechenden Isolationsklasse, insbesondere aus einem Thermomer oder aus einem thermoplastischen Elastomer (TPE), bestehen. Es ist auch möglich, das Trennelement 1 beispielsweise aus einem mit einem Polymer getränkten und verfestigten Vlies zu fertigen.

Bei der Herstellung der für Spritzguss oder Tiefziehen einzusetzenden Formen kann dabei mit Vorteil so verfahren werden, wie bereits vorstehend beschrieben wurde. Es wird zunächst auf den Wickelkern 8 der mit der erfindungsgemäßen Wicklungsanordnung 7 auszustattenden elektrischen Maschine eine erste Wickellage A der Wicklung 6 aufgebracht, wie dies auch Fig. 3 zu entnehmen ist. Die mit der Wickellage A versehene Stirnseite des Wickelkerns 8 wird zur Gewinnung von - insbesondere CAD-fähigen - Topographiedaten einer dreidimensionalen Scannung unterworfen und demgemäß wird die Kavität der Form zur Herstellung des Trennelementes 1 ausgebildet.

Das erfindungsgemäße Trennelement 1 sollte im Hinblick auf seine automatisierte Montage einerseits formstabil sein, was durch das Material, aber auch durch eine versteifend wirkende, nach innen oder außen gewölbte, Formausbildung erreicht werden kann.

So sind Fig. 2 im mittleren Bereich, wo die Längsachse X-X verläuft, eine Innenwölbung 11 und in seitlich davon liegenden äußeren Bereichen Außenwölbungen 12 zu entnehmen, die in der dargestellten Draufsicht jeweils konkav bzw. konvex sind, wie die Höhenlinien 2 veranschaulichen.

Durch die Wölbungen 11, 12, die auch dadurch bedingt sind, dass die die Unterseite 5 des Trennelementes 1 bildende Freiformfläche eine exakte Negativabbildung der unter dem Trennelement 1 liegenden Wickellage A ist, wird vorteilhafterweise auch erreicht, dass das Trennelement 1 derart kappenartig ausgebildet ist, dass es selbstfixierend auf die Wicklungen 6 der darunter liegenden Wickellage A aufsetzbar ist und nach Aufbringen der nächsten Wickellage B - gegebenenfalls, jedoch nicht notwendigerweise unter Verformung - im Wesentlichen spaltfrei zwischen den Wickellagen A, B sitzt. Die Höhe des Wickelkopfes 10 vergrößernde stegartige Halteansätze, wie sie eingangs für die bekannten Wicklungsanordnungen erwähnt wurden, oder zusätzliche Elemente, wie die genannten Randstege, brauchen dabei nicht vorgesehen zu werden.

Andererseits sollte das erfindungsgemäße Trennelement 1 unter dem Aspekt, dass die Wicklungen 6 abgepresst werden sollen und die jeweils obere Wickellage - im dargestellten Fall die zweite Wickellage B - optimal auf dem Trennelement 1 abgelegt werden kann, auch - zumindest bereichsweise - flexibel sein, was u. a. - mit den vorstehenden Einschränkungen im Hinblick auf das Material - dadurch erreicht werden kann, dass das Trennelement aus einem elastisch verformbaren Material besteht. Diesen unterschiedlichen Forderungen Rechnung tragend kann - wie Fig. 1 und 2 zeigen - auch mit Vorteil vorgesehen sein, dass insbesondere in Bereichen, wo im Montagezustand die erste (untere) Wickellage A von der zweiten (oberen) Wickellage B ohnehin getrennt ist, Aussparungen 13, wie die im Bereich der Querachse Y-Y beidseitig vorgesehenen Schlitze 13a oder in alternativer Ausbildung auch runde oder langlochartige Öffnungen vorgesehen sind.

Konkret zeigen Fig. 1 und 2 eine Ausführung, bei der die Aussparung 13 jeweils als nach innen (oben) offener und randseitig (unten) geschlossener Schlitz 13a ausgebildet ist. Der randseitige Verschluss des Schlitzes 13a wird dabei durch ein Filmscharnier 14 gebildet.

Fig. 1 und 2 zeigen des Weiteren, dass das erfindungsgemäße Trennelement 1 neben den genannten Aussparungen 13 noch weitere Durchbrechungen 15 aufweisen kann. Diese sind dazu bestimmt, mit korrespondierenden bzw. komplementären Teilen 16 des Wickelkerns 8, insbesondere mit den in Fig. 3 bis 5 dargestellten, in axialer Richtung Z-Z abragenden säulenartigen Wickelabstützungen 16a des Wickelkerns 8, im Sinne einer Fixierung des Trennelementes 1 auf dem Wickelkopf 10 zusammenzuwirken. Das Trennelement 1 kann auf den Wickelkern 8 aufgesetzt werden, wobei die Wickelabstützungen 16a die Durchbrechungen 15 durchgreifen und so das Trennelement 1 gegen eine seitliche Verschiebung gesichert auf dem Wickelkopf 10 festhalten.

Um eine optimale Wicklungstrennung zu erzielen, sollte dabei vorgesehen sein, dass die Durchbrechungen 15 randseitig von einer Verstärkung 17, insbesondere von einem auch als Einführhilfe wirkenden Trichter 17a, umgeben sind.

Anhand von Fig. 3 bis 6 wird nachstehend der Verlauf der Herstellung bzw. Bewicklung einer erfindungsgemäßen Wicklungsanordnung 7 erläutert.

Zunächst wird eine erste Wicklungsgruppe gewickelt, wodurch die erste, untere Wickellage A des Wickelkopfes 10 entsteht. Fig. 3 zeigt den beispielhaft dargestellten Stator mit der Wickellage A, bei der die Wicklungsstränge sich links und rechts eines Stirnisolationsschaftes 18 des Stators verzweigen und an der Peripherie des Wickelkopfes 10 in jeweils zwei Nuten 9 eingeführt sind. Die Phasenisolation fehlt noch.

Danach wird, wie in Fig. 4 dargestellt, das Trennelement 1 in axialer Richtung Z-Z aufgesetzt. Hierzu ist auch zu bemerken, dass die Trennelemente 1 stapelbar und daher gut magazinierbar sind und der Vorgang - wie auch das Bewickeln - automatisiert erfolgen kann. Ein manueller Eingriff ist bei der gesamten Montage - auch bei den nachfolgenden Montageschritten - nicht notwendig. Nach dem Aufsetzen liegt das Trennelement 1 aufgrund der erfindungsgemäßen Formausbildung seiner Unterseite 5 auf der unteren Wickellage A bereits nahezu spaltfrei auf. Über die Durchbrechungen 15 und die in axialer Richtung Z-Z abragenden säulenartigen Wickelabstützungen 16a des Wickelkerns 8 kann das Trennelement 1 auf dem Wickelkopf 10 fixiert werden. Außerdem ist auch zu erwähnen, dass das Trennelement 1 eine zentrische Öffnung 19 (Fig. 1, 2) zum Aufsetzen auf den hohlzylindrischen Stirnisolationsschaft 18 des Wickelkerns 8 aufweist, wodurch es ebenfalls fixiert wird. In diese Öffnung 19 münden die beiden oben erwähnten, die Aussparungen 13 bildenden, nach innen offenen und nach außen geschlossenen Schlitze 13a.

Anschließend wird, wie durch Fig. 5 veranschaulicht, eine zweite Wicklungsgruppe jeweils über das Trennelement 1 hinweg gewickelt. Die Wicklungen 6 der so entstehenden Wickellage B können problemlos ebenfalls nahezu spaltfrei auf die Oberseite 4 des Trennelements 1 aufgebracht werden. Die Herstellung der oberen Wickellage B wird durch das Trennelement 1 in keiner Weise behindert oder gestört. Durch das Bewickeln kann das Trennelement 1 gegebenenfalls - beispielsweise durch ein Verschwenken der beidseitig der Querachse Y-Y liegenden Teilbereiche des Trennelements 1 in den Filmscharnieren 14 - so verformt werden, dass es sich noch enger an die untere Wickellage A anschmiegt, wobei auch aufgrund der Flexibilität des Trennelementes 1 eine Verpressung möglich ist. Auch in der zweiten Wickellage B, deren Stränge etwa rechtwinklig zur ersten Wickellage A verlaufen, verzweigen sich die beidseitig des Stirnisolationsschaftes 18 verlaufenden Wicklungsstränge an der Peripherie des Wickelkopfes 10 und münden jeweils in zwei Nuten 9 des Wickelkerns 8.

Die derart hergestellte erfindungsgemäße Wicklungsanordnung 7 zeichnet sich durch eine prozesssichere Isolation, aufgrund der geringen axialen Höhe ihres Wickelkopfes 10 durch eine äußerst kompakte Bauweise und aufgrund der Automatisierbarkeit der Montage - beispielsweise können die Trennelemente 1 in einfacher Weise maschinell gehandhabt werden - durch eine kostengünstige Fertigung und Weiterverarbeitbarkeit aus.

Um das Bauteil zu komplettieren, kann abschließend, wie dies Fig. 6 zeigt, bevorzugt die letzte, oberste Wickellage B mit einem ringkappenartigen Abdeckteil 20 abgedeckt werden.

Wie bereits aus den vorstehenden Ausführungen hervorgeht, ist die vorliegende Erfindung nicht auf das dargestellte Ausführungsbeispiel beschränkt, sondern umfasst alle im Sinne der Erfindung gleichwirkenden Mittel und Maßnahmen. Die Erfindung kann beispielsweise auch bei beliebigen anderen, von der dargestellten Wicklung 6 abweichenden Wicklungsarten vorgesehen sein. Dabei versteht es sich, dass nicht nur zwei Wickellagen A, B, sondern auch drei oder mehr in einer erfindungsgemäßen Wicklungsanordnung 7 vorgesehen sein können. Bei dem Wickelkern 8 muss es sich auch nicht zwingend um einen Stator eines elektrischen Motors handeln, sondern die Erfindung eignet sich auch für andere elektrische Maschinen, wie beispielsweise Generatoren, an denen stirnseitig ein Wickelkopf 10 gebildet ist.

Des Weiteren kann der Fachmann zusätzliche vorteilhafte technische Merkmale vorsehen, ohne dass der Rahmen der Erfindung verlassen wird. So ist es zum Beispiel möglich, dass der Wickelkern 8 im Bereich seiner Nuten 9 und/oder seiner wickelkopfseitigen Stirnflächen eine Isolierschicht aufweist, wobei der Wickelkern 8 zur Bildung dieser Isolierschicht mit Kunststoff umspritzt sein kann. Vorzugsweise kann dabei auch der Stirnisolationsschaft 18 einstückig angespritzt sein.

Schließlich besteht auch die vorteilhafte Möglichkeit, im oder am Trennelement 1 derartige technische Modifikationen - z. B. bei einem Rotor die Halterung oder Einbettung eines Hall-Sensors - vorzunehmen, so dass es bedarfsweise weitere zusätzliche Funktionen übernehmen kann. Hierzu, wie auch beispielsweise zum Zweck der Erhöhung der Formstabilität oder einer verbesserten Anpassung der Oberseite 4 des erfindungsgemäßen Trennelements 1 an die darüberliegende Wickellage B, kann auch die Dicke D des Trennelementes 1 integral oder bereichsweise von dem als bevorzugt genannten Wert und von ihrer Gleichförmigkeit abweichen.

### Bezugszeichen

- 1: Trennelement
- 2: Höhenlinie von 1
- 3: Kantenlinie von 1
- 4: Oberseite von 1
- 5: Unterseite von 1
- 6: Wicklung, Wickellagen A und B
- 7: Wicklungsanordnung
- 8: Wickelkern von 7
- 9: Nuten in 8
- 10: Wickelkopf von 7
- 11: Innenwölbung von 1
- 12: Außenwölbung von 1
- 13: Aussparung
- 13a: Schlitz als 13
- 14: Filmscharnier von 1
- 15: Durchbrechung in 1 für 16
- 16: Komplementärteil zu 15 von 8
- 16a: Wickelabstützung als 16
- 17: Randverstärkung von 15
- 17a: Trichter als 17
- 18: Stirnisolationsschaft von 7
- 19: Öffnung in 1 für 18
- 20: Abdeckteil für 7

- A: erste, untere Wickellage von 6
- B: zweite, obere Wickellage von 6
- D: Dicke von 1
- X-X: Längsachse von 1
- Y-Y: Querachse von 1
- Z-Z: Längsachse von 7

## Patentansprüche

1. Wicklungsanordnung (7) für eine elektrische Maschine, wie Elektromotor oder Generator, bestehend aus einem metallischen, insbesondere als Blechpaket ausgeführten Wickelkern (8) sowie aus durch Nuten (9) des Wickelkerns (8) verlaufenden und außerhalb der Nuten (9) auf Stirnseiten des Wickelkerns (8) jeweils einen Wickelkopf (10) bildenden Wicklungen (6), wobei die Wicklungen (6) im Bereich jedes Wickelkopfes (10) mindestens zwei übereinander liegende Wickellagen (A, B) bilden, zwischen denen jeweils ein im Wesentlichen scheibenförmiges, aus einem elektrisch isolierenden Material bestehendes Trennelement (1) im Wesentlichen spaltfrei an die Wicklungen (6) angeschmiegt angeordnet ist, **dadurch gekennzeichnet, dass** die Unterseite (5) des Trennelementes (1) durch eine vorgeformte Freiformfläche gebildet ist, die eine exakte Negativabbildung der unter dem Trennelement (1) liegenden Wickellage (A) ist.

2. Wicklungsanordnung (7) nach Anspruch 1,
**dadurch gekennzeichnet, dass** das Trennelement (1) als Spritzgießteil oder als Ziehteil ausgebildet ist.

3. Wicklungsanordnung (7) nach Anspruch 1 oder 2,
**dadurch gekennzeichnet, dass** das Trennelement (1) formstabil ist.

4. Wicklungsanordnung (7) nach einem der Ansprüche 1 bis 3,
**dadurch gekennzeichnet, dass**dasTrennelement(1)aus einem elastisch verformbaren Material besteht.

5. Wicklungsanordnung (7) nach einem der Ansprüche 1 bis 4,
**dadurch gekennzeichnet, dass** das Trennelement (1) aus Kunststoff, insbesondere aus einem Thermomer, oder aus einem mit einem Polymer getränkten und verfestigten Vlies besteht.

6. Wicklungsanordnung (7) nach einem der Ansprüche 1 bis 5,
**dadurch gekennzeichnet, dass** das Trennelement (1) eine gleichmäßige Dicke (D) aufweist.

7. Wicklungsanordnung (7) nach Anspruch 6,
**dadurch gekennzeichnet, dass** die Dicke (D) des Trennelements (1) kleiner ist als 1 mm.

8. Wicklungsanordnung (7) nach einem der Ansprüche 1 bis 7,
**dadurch gekennzeichnet, dass** das Trennelement (1) eine versteifend wirkende, nach innen (11) oder außen (12) gewölbte Formausbildung besitzt.

9. Wicklungsanordnung (7) nach einem der Ansprüche 1 bis 8,
**dadurch gekennzeichnet, dass** das Trennelement (1), insbesondere in Bereichen, wo im Montagezustand eine untere Wickellage (A) von einer darüber liegenden, oberen Wickellage (B) getrennt ist, Aussparungen (13), wie Schlitze (13a) und/oder runde oder langlochartige Öffnungen, aufweist.

10. Wicklungsanordnung (7) nach Anspruch 9,
**dadurch gekennzeichnet, dass**dasTrennelement(1)als Aussparungen (13) jeweils, insbesondere im Bereich seiner Querachse (Y-Y) beidseitig ausgebildete Schlitze (13a) aufweist.

11. Wicklungsanordnung (7) nach Anspruch 10,
**dadurch gekennzeichnet, dass** die Schlitze (13a) nach innen offen und randseitig insbesondere durch ein Filmscharnier (14), geschlossen sind.

12. Wicklungsanordnung (7) nach einem der Ansprüche 1 bis 11,
**dadurch gekennzeichnet, dass**dasTrennelement(1) Durchbrechungen (15) aufweist, die dazu bestimmt sind, das Trennelement (1) an korrespondierenden Teilen (16) des Wickelkerns (8), insbesondere an Wickelabstützungen (16a), zu befestigen.

13. Wicklungsanordnung (7) nach Anspruch 12,
**dadurch gekennzeichnet, dass** die Durchbrechungen (15) randseitig von einer Verstärkung (17), insbesondere von einem Trichter (17a), umgeben sind.

14. Wicklungsanordnung (7) nach einem der Ansprüche 1 bis 13,
**dadurch gekennzeichnet, dass** das Trennelement (1) derart kappenartig ausgebildet ist, dass es selbstfixierend auf die Wicklungen (6) einer Wickellage (A) aufsetzbar ist und nach Aufbringen der nächsten Wickellage (B), gegebenenfalls unter Verformung, im Wesentlichen spaltfrei zwischen den Wickellagen (A, B) sitzt.

15. Wicklungsanordnung (7) nach einem der Ansprüche 1 bis 14,
**dadurch gekennzeichnet, dass** das Trennelement (1) eine zentrische Öffnung (22) zum Aufsetzen auf einen hohlzylindrischen Stirnisolationsschaft (18) des Wickelkerns (8) aufweist.

16. Wicklungsanordnung (7) nach einem der Ansprüche 1 bis 15,
**dadurch gekennzeichnet, dass**dieobersteWickellage(B) mit einem kappenartigen Abdeckteil (20) abgedeckt ist.

17. Wicklungsanordnung (7) nach einem der Ansprüche 1 bis 16,
**dadurch gekennzeichnet, dass** der Wickelkern (8) im Bereich seiner Nuten (9) und/oder seiner wickelkopfseitigen Stirnflächen eine Isolierschicht aufweist.

18. Wicklungsanordnung (7) nach Anspruch 17,
**dadurch gekennzeichnet, dass** der Wickelkern (8) zur Bildung der Isolierschicht mit Kunststoff umspritzt ist, wobei vorzugsweise ein/der Stirnisolationsschaft (18) einstückig angespritzt ist

19. Trennelement (1) für eine Wicklungsanordnung (7) nach einem der Ansprüche 1 bis 18,
**gekennzeichnet durch** die Merkmale des kennzeichnenden Teils eines der Ansprüche 1 bis 15.

## Claims

1. A winding arrangement (7) for an electric machine, such as an electric motor or generator, consisting of a metallic winding core (8), in particular designed as a laminated core, and of windings (6) which extend through grooves (9) in the winding core (8) and form in each case a winding head (10) outside the grooves (9) on end faces of the winding core (8), the windings (6) in the region of each winding head (10) forming at least two winding layers (A, B) located one above the other, between which layers in each case a substantially disc-shaped separating element (1) consisting of an electrically insulating material is arranged fitting snugly against the windings (6) substantially without a gap, **characterised in that** the underside (5) of the separating element (1) is formed by a pre-formed free-form surface which is an exact negative image of the winding layer (A) located beneath the separating element (1).

2. A winding arrangement (7) according to Claim 1, **characterised in that** the separating element (1) is formed as an injection-moulded part or as a drawn part.

3. A winding arrangement (7) according to Claim 1 or 2, **characterised in that** the separating element (1) is dimensionally stable.

4. A winding arrangement (7) according to one of Claims 1 to 3, **characterised in that** the separating element (1) consists of an elastically deformable material.

5. A winding arrangement (7) according to one of Claims 1 to 4, **characterised in that** the separating element (1) consists of plastics material, in particular of a thermomer, or of a non-woven material which is impregnated and consolidated with a polymer.

6. A winding arrangement (7) according to one of Claims 1 to 5, **characterised in that** the separating element (1) has a uniform thickness (D).

7. A winding arrangement (7) according to Claim 6, **characterised in that** the thickness (D) of the separating element (1) is less than 1 mm.

8. A winding arrangement (7) according to one of Claims 1 to 7, **characterised in that** the separating element (1) has a shaping which bulges inwards (11) or outwards (12) which has a reinforcing effect.

9. A winding arrangement (7) according to one of Claims 1 to 8, **characterised in that** the separating element (1), in particular in regions in which in the mounted state a lower winding layer (A) is separated from an overlying upper winding layer (B), has cutouts (13), such as slots (13a) and/or round openings or openings like an elongated hole.

10. A winding arrangement (7) according to Claim 9, **characterised in that** the separating element (1) has as cutouts (13) in each case slots (13a) formed on both sides in particular in the region of its transverse axis (Y-Y).

11. A winding arrangement (7) according to Claim 10, **characterised in that** the slots (13a) are open inwards and on the edge are closed in particular by an integral hinge (14).

12. A winding arrangement (7) according to one of Claims 1 to 11, **characterised in that** the separating element (1) has apertures (15) which are intended to fasten the separating element (1) to corresponding parts (16) of the winding core (8), in particular to winding support means (16a).

13. A winding arrangement (7) according to Claim 12, **characterised in that** the apertures (15) are surrounded on the edge by a reinforcement means (17), in particular by a funnel (17a).

14. A winding arrangement (7) according to one of Claims 1 to 13, **characterised in that** the separating element (1) is formed in cap-like manner such that it can be placed in self-fixing manner on the windings (6) of a winding layer (A) and after the application of the next winding layer (B), optionally under deformation, is seated in substantially gap-free manner between the winding layers (A, B).

15. A winding arrangement (7) according to one of Claims 1 to 14, **characterised in that** the separating element (1) has a central opening (22) for placing on a hollow-cylindrical end-face insulation shaft (18) of the winding core (8).

16. A winding arrangement (7) according to one of Claims 1 to 15, **characterised in that** the uppermost winding layer (B) is covered with a cap-like covering part (20).

17. A winding arrangement (7) according to one of Claims 1 to 16, **characterised in that** the winding core (8) has an insulating layer in the region of its grooves (9) and/or its end faces which are on the winding-head side.

18. A winding arrangement (7) according to Claim 17, **characterised in that** the winding core (8), for the formation of the insulating layer, is encapsulated with plastics material, with preferably a/the end-face insulation shaft (18) being moulded on in one piece.

19. A separating element (1) for a winding arrangement (7) according to one of Claims 1 to 18, **characterised by** the features of the characterising clause of one of Claims 1 to 15.

## Revendications

1. Système d'enroulement (7) pour une machine électrique, telle qu'un moteur électrique ou un générateur, formé par un noyau d'enroulement (8) métallique, réalisé en particulier sous forme de paquet de tôles, ainsi que par des enroulements (6) s'étendant à travers des rainures (9) du noyau d'enroulement (8) et formant sur les faces frontales du noyau d'enroulement (8) à l'extérieur des rainures (9) chacune une tête d'enroulement (10), les enroulements (6) formant dans la zone de chaque tête d'enroulement (10) au moins deux couches d'enroulement (A, B) superposées, entre lesquelles est agencé respectivement un élément de séparation (1), sensiblement en forme de disque, réalisé dans un matériau électro-isolant et en appui contre les enroulements (6) sensiblement sans fente,
**caractérisé en ce que** la face inférieure (5) de l'élément de séparation (1) est formée par une surface à formage libre préformée, qui est une reproduction négative exacte de la couche d'enroulement (A) située en dessous de l'élément de séparation (1).

2. Système d'enroulement (7) selon la revendication 1, **caractérisé en ce que** l'élément de séparation (1) est réalisé sous la forme d'une pièce moulée par injection ou d'une pièce emboutie.

3. Système d'enroulement (7) selon la revendication 1 ou 2, **caractérisé en ce que** l'élément de séparation (1) est stable en forme.

4. Système d'enroulement (7) selon l'une quelconque des revendications 1 à 3, **caractérisé en ce que** l'élément de séparation (1) est réalisé dans un matériau élastiquement déformable.

5. Système d'enroulement (7) selon l'une quelconque des revendications 1 à 4, **caractérisé en ce que** l'élément de séparation (1) est réalisé en matière plastique, en particulier dans un thermomère, ou dans un non-tissé imprégné d'un polymère et renforcé.

6. Système d'enroulement (7) selon l'une quelconque des revendications 1 à 5, **caractérisé en ce que** l'élément de séparation (1) a une épaisseur (D) uniforme.

7. Système d'enroulement (7) selon la revendication 6, **caractérisé en ce que** l'épaisseur (D) de l'élément de séparation (1) est inférieure à 1 mm.

8. Système d'enroulement (7) selon l'une quelconque des revendications 1 à 7, **caractérisé en ce que** l'élément de séparation (1) possède une forme agissant comme renforcement, bombée vers l'intérieur (11) ou l'extérieur (12).

9. Système d'enroulement (7) selon l'une quelconque des revendications 1 à 8, **caractérisé en ce que** l'élément de séparation (1), en particulier dans les zones où, dans la position montée, une couche d'enroulement (A) inférieure est séparée d'une couche d'enroulement (B) supérieure, comporte des évidements (13), tels que des fentes (13a) et/ou des ouvertures rondes ou en forme de trous oblongs.

10. Système d'enroulement (7) selon la revendication 9, **caractérisé en ce que** l'élément de séparation (1) comporte des fentes (13a) formant les évidements (13), lesquelles sont réalisées chacune des deux côtés en particulier dans la zone de son axe transversal (Y-Y).

11. Système d'enroulement (7) selon la revendication 10, **caractérisé en ce que** les fentes (13a) sont ouvertes vers l'intérieur et sont fermées sur les bords, en particulier par une charnière flexible (14).

12. Système d'enroulement (7) selon l'une quelconque des revendications 1 à 11, **caractérisé en ce que** l'élément de séparation (1) comporte des ajours (15), qui sont destinés à fixer l'élément de séparation (1) sur des parties (16) correspondantes du noyau d'enroulement (8), en particulier sur des supports d'enroulement (16a).

13. Système d'enroulement (7) selon la revendication 12, **caractérisé en ce que** les ajours (15) sont entourés sur leurs bords par un renforcement (17), en particulier par un entonnoir (17a).

14. Système d'enroulement (7) selon l'une quelconque des revendications 1 à 13, **caractérisé en ce que** l'élément de séparation (1) est réalisé en forme de capuchon, de telle sorte qu'il peut être posé par auto-fixation sur les enroulements (6) d'une couche d'enroulement (A), et après la pose de la couche d'enroulement (B) suivante, il est logé, le cas échéant moyennant une déformation, sensiblement sans fente entre les couches d'enroulement (A, B).

15. Système d'enroulement (7) selon l'une quelconque des revendications 1 à 14, **caractérisé en ce que** l'élément de séparation (1) comporte une ouverture centrale (22) destinée à être posée sur une tige d'isolation frontale (18) cylindrique creuse du noyau d'enroulement (8).

16. Système d'enroulement (7) selon l'une quelconque des revendications 1 à 15, **caractérisé en ce que** la couche d'enroulement (B) supérieure est recouverte par un élément de recouvrement (20) en forme de capuchon.

17. Système d'enroulement (7) selon l'une quelconque des revendications 1 à 16, **caractérisé en ce que** le noyau d'enroulement (8) comporte une couche isolante dans la zone de ses rainures (9) et/ou de ses faces frontales du côté de la tête d'enroulement.

18. Système d'enroulement (7) selon la revendication 17, **caractérisé en ce qu'**une matière plastique est surmoulée sur le noyau d'enroulement (8) pour former la couche isolante, sachant que, de préférence, une/la tige d'isolation frontale (18) est formée d'un seul tenant par moulage par injection contre celui-ci.

19. Élément de séparation (1) pour un système d'enroulement (7) selon l'une des revendications 1 à 18, **caractérisé par** les caractéristiques de la partie caractérisante de l'une des revendications 1 à 15.
